# EUROPÄISCHE PATENTSCHRIFT

(11) **EP 4 371 396 B1**
(45) Veröffentlichungstag und Bekanntmachung des Hinweises auf die Patenterteilung: **28.10.2026**
(21) Anmeldenummer: 23206449.3
(22) Anmeldetag: 27.10.2023
(51) Int. Cl.: A01D 43/08, A01D 89/00, A01F 15/10, A01D 41/14

(54) **ERNTEVORSATZ MIT MIT HÖHENBEWEGLICHER QUERFÖRDERSCHNECKE**
HARVESTING HEADER WITH VERTICALLY MOVABLE TRANSVERSE CONVEYOR AUGER
TÊTE DE RÉCOLTE AVEC VIS SANS FIN TRANSVERSALE À DÉPLACEMENT VERTICAL

(30) Priorität: 21.11.2022 DE 102022130748
(43) Veröffentlichungstag der Anmeldung: 22.05.2024
(73) Patentinhaber: Deere & Company, Moline, IL 61265 (US)
(72) Erfinder: RATHMER, Mike, 68163 Mannheim (DE)
(74) Vertreter: Holst, Sönke

(56) Entgegenhaltungen:
- EP-A2- 1 444 881
- DE-A1- 102005 062 266
- US-A- 2 835 100
- US-A- 4 409 780
- US-A1- 2020 390 034

## Beschreibung

Die Erfindung betrifft einen Erntevorsatz nach dem Oberbegriff des Anspruchs 1 sowie eine damit ausgestattete Erntemaschine.

### Stand der Technik

Erntevorsätze werden in der Landwirtschaft verwendet, um auf einem Feld liegendes oder stehendes Gut aufzunehmen und es in eine Erntemaschine zu fördern, die selbstfahrend ist oder von einem Ackerschlepper über ein Feld bewegt wird. Zur Querförderung des Ernteguts dienen bei manchen Erntevorsätzen, wie Schneidwerken, Maispflückern und Schwadaufnehmern, Querförderschnecken. Die Schwadaufnehmer dienen dazu, Erntegut, das in der Regel zuvor getrocknet und in einem Schwad abgelegt wurde, aufzunehmen und der Erntemaschine zuzuführen, in der es zu einem Ballen gepresst (Ballenpresse), - ggf. nach einem Schneidvorgang - zum Abtransport abgelegt (Ladewagen), gehäckselt (Feldhäcksler) oder ausgedroschen (Mähdrescher) wird.

Derartige Schwadaufnehmer umfassen üblicherweise eine Aufsammeltrommel mit an sich quer zur Vorwärtsrichtung erstreckenden Zinkenträgern angebrachte Zinken. Die Zinkenträger werden in Bewegung versetzt, indem ein sie abstützender Halter in Rotation versetzt wird. Die Zinken erstrecken sich durch Zwischenräume, die zwischen am Rahmen des Schwadaufnehmers angebrachten Abstreifern verbleiben, nach außen und bewegen sich entlang dieser Zwischenräume. Stromab der Aufsammeltrommel folgt üblicherweise die Querförderschnecke, welche das Erntegut der Erntemaschine zuführt, in der es weiterverarbeitet (geschnitten oder gedroschen) oder gesammelt oder gepresst wird.

Im Stand der Technik sind die Querförderschnecken starr am Gestell des Erntevorsatzes befestigt, oder sie werden dort höhenverstellbar angebracht, damit sie abhängig vom Gutfluss nach oben ausweichen können. Hierzu werden sie üblicherweise endseitig an Schwingen gelagert, die an gegenüber der Drehachse der Querförderschnecke nach hinten versetzten Schwenklagern um die Querachse angelenkt sind (DE 102 41 216 A1, EP 1 738 634 A1). Die Querförderschnecken können somit nach oben ausweichen, wenn die Schwadhöhe ansteigt.

Der Antrieb der höhenverstellbaren Querförderschnecken erfolgt üblicherweise durch Kettentriebe (s. US 4 622 805 A für ein Getreideschneidwerk mit höhenverstellbarer Querförderschnecke). Derartige Kettentriebe ermöglichen zwar eine Höhenbewegung, sind aber wartungsintensiv und verschleißanfällig. Es finden sich teleskopierbare Gelenkwelle im Antriebssträngen von Schwadaufnehmern bisher nur im Antriebsstrang zwischen der Erntemaschine und dem Schwadaufnehmer oder innerhalb mehrteiliger Querförderschnecken, um das Herstellen der Antriebsverbindung beim Ausfalten der Querförderschnecke in die Betriebsstellung zu erleichtern (EP 3 235 364 A1), oder um eine in eine kontinuierliche Quer- und Vertikalschwingung versetzbare Querförderschnecke anzutreiben (US 2 835 100 A), oder Querschnecken an mehrteiligen Erntevorsätzen mit in eine Außerbetriebsstellung verbringbaren Außenteilen (US 2020/0390034 A, US 4 409 780 A). Ein weiterer Erntevorsatz ist aus US2019008094 A1 bekannt.

### Problem

Das der Erfindung zu Grunde liegende Problem wird darin gesehen, einen Erntevorsatz und eine damit ausgestattete Erntemaschine bereitzustellen, bei dem sich die geschilderten Probleme nicht oder in einem verminderten Maße ergeben.

### Lösung

Dieses Problem wird erfindungsgemäß durch die Lehre der Patentansprüche 1 und 7 gelöst, wobei in den weiteren Patentansprüchen Merkmale aufgeführt sind, welche die Lösung in vorteilhafter Weise weiterentwickeln.

Ein Erntevorsatz ist mit einem in einer Vorwärtsrichtung über ein Feld bewegbaren, tragenden Gestell ausgestattet, an dem eine Einrichtung zum Aufnehmen von Erntegut von einem Feld und eine höhenbewegliche Querförderschnecke angebracht sind, die mittels einer am Gestell drehbar abgestützten Antriebswelle antreibbar ist. Zwischen der Antriebswelle und der Querförderschnecke ist eine teleskopierbare Gelenkwelle angeordnet.

Auf diese Weise vermeidet man die verschleißanfällige und wartungsintensive Kette zum Antrieb der Querförderschnecke.

Bei dem Erntevorsatz kann es sich insbesondere um einen Schwadaufnehmer handeln, bei dem die Einrichtung zum Aufnehmen von Erntegut als Aufsammeltrommel ausgeführt ist.

Es kann jedoch auch ein Schneidwerk oder ein Maispflücker mit der höhenbeweglichen Querförderschnecke versehen werden.

Die Gelenkwelle ist in einem endseitigen Hohlraum der Querförderschnecke angeordnet. Die Querförderschnecke ist an beiden Enden durch Lagerungen an Schwingen drehbar gelagert, die an Schwenklagern mit sich in Querrichtung erstreckenden Drehachsen am Gestell befestigt sind. Die Querförderschnecke kann ein an seiner Außenseite mit wendelförmigen Mitnehmern versehenes Rohr umfassen.

Bei einer möglichen Ausführungsform sind die Lagerungen zwischen der Schwinge und der Innenseite des Rohres der Querförderschnecke angeordnet. Diese Anordnung ist relativ einfach aufgebaut, erfordert jedoch relativ große Lagerungen.

Bei einer anderen Ausführungsform erstreckt sich eine mit der Schwinge starr verbundene (zylindrische) Wand sich im Innenraum des Rohres von der Schwinge nach innen und bildet einen Hohlraum, in dem die Gelenkwelle angeordnet ist. Hierbei kann eine (insbesondere durch eine sich radial zum Rohr erstreckende Halterung) mit dem Rohr starr verbundene Abtriebswelle durch eine Lagerung an einer mit der Wand verbundenen Stützscheibe abgestützt sein. Dieser Aufbau kommt mit kleineren Lagerungen als die zuvor beschriebene Ausführungsform aus.

Der Erntevorsatz, insbesondere Schwadaufnehmer, kann an beliebigen (selbstfahrenden, gezogenen oder angebauten) Erntemaschinen verwendet werden, insbesondere an Feldhäckslern, Ladewagen, Ballenpresse oder Mähdreschern.

### Ausführungsform

In den Zeichnungen sind zwei nachfolgend näher beschriebene Ausführungsbeispiele dargestellt. Es zeigt:
- Fig. 1: eine Seitenansicht eines Feldhäckslers mit einem Erntevorsatz in Form eines Schwadaufnehmers,
- Fig. 2: eine perspektivische Ansicht des Schwadaufnehmers von vorn links,
- Fig. 3: eine perspektivische, rückwärtige Ansicht des Schwadaufnehmers von links unten,
- Fig. 4: einen Schnitt durch den Schwadaufnehmer entlang der Linie 4-4 der Figur 2,
- Fig. 5: einen horizontalen Schnitt durch eine erste Ausführungsform eines Schwadaufnehmers bei mittlerer Stellung der Querförderschnecke,
- Fig. 6: einen horizontalen Schnitt gemäß Figur 5 bei angehobener Stellung der Querförderschnecke,
- Fig. 7: einen horizontalen Schnitt gemäß Figur 5 bei abgesenkter Stellung der Querförderschnecke, und
- Fig. 8: einen horizontalen Schnitt durch eine zweite Ausführungsform eines Schwadaufnehmers.

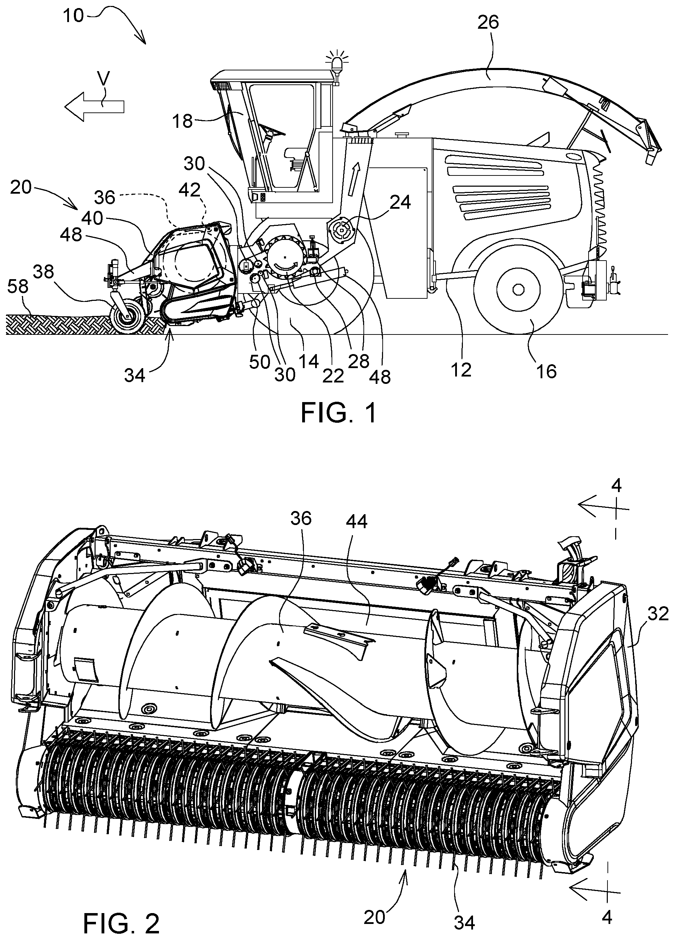

In der Figur 1 ist eine Erntemaschine in der Art eines selbstfahrenden Feldhäckslers 10 dargestellt. Der Feldhäcksler 10 baut sich auf einem Rahmen 12 auf, der von vorderen angetriebenen Rädern 14 und lenkbaren rückwärtigen Rädern 16 getragen wird. Die Bedienung des Feldhäckslers 10 erfolgt von einer Fahrerkabine 18 aus, von der aus ein Erntevorsatz in Form eines Schwadaufnehmers 20 einsehbar ist. Mittels des Schwadaufnehmers 20 vom Boden aufgenommenes Erntegut, z. B. Gras oder dergleichen, wird über einen Einzugsförderer mit Vorpresswalzen 30, die innerhalb eines Einzugsgehäuses 50 an der Frontseite des Feldhäckslers 10 angeordnet sind, einer Häckseltrommel 22 zugeführt, die es in kleine Stücke häckselt und es einem Auswurfbeschleuniger 24 aufgibt. Das Gut verlässt den Feldhäcksler 10 zu einem nebenher fahrenden Anhänger über einen um eine etwa vertikale Achse drehbaren und in der Neigung verstellbaren Auswurfkrümmer 26. Zwischen der Häckseltrommel 22 und der Fördervorrichtung 24 erstreckt sich eine Nachzerkleinerungsvorrichtung 28 mit zwei Körnerprozessorwalzen, durch die das zu fördernde Gut der Fördervorrichtung 24 tangential zugeführt wird. Die Nachzerkleinerungsvorrichtung 28 wird insbesondere bei der Maisernte benötigt, um Körner anzuschlagen, und wird bei der Grasernte ausgebaut oder in eine unwirksame Offenstellung verbracht.

Der Schwadaufnehmer 20 ist als so genannte Pick-Up ausgebildet. Der Schwadaufnehmer 20 baut sich auf einem Gestell 32 auf und stützt sich (zumindest teilweise) über beidseitig angebrachte Stützräder 38, die über je einen Träger am Gestell 32 befestigt sind, auf dem Erdboden ab. Die Aufgabe des Schwadaufnehmers 20 besteht darin, auf dem Boden eines Felds verstreut oder in einem Schwad 58 abgelegtes Erntegut aufzunehmen und es der Erntemaschine 10 zur weiteren Bearbeitung zuzuführen. Hierzu wird der Schwadaufnehmer 20 während des Erntebetriebes mit geringem Abstand zum Erdboden über das Feld bewegt, während er zum Transport auf einer Strasse oder auf Wegen mittels eines Hydraulikzylinders 48 angehoben wird, welcher das Einzugsgehäuse 50 und den daran befestigten Schwadaufnehmer 20 um die Drehachse der Häckseltrommel 22 verschwenkt. Der Hydraulikzylinder 48 dient auch zur Einstellung der Höhe des Schwadaufnehmers 20 über dem Boden, bzw. zur Einstellung des Auflagedrucks der Stützräder 38 auf dem Erdboden.

Zum Schwadaufnehmer 20 gehört eine Querförderschnecke 36, die das aufgenommene Gut von den Seiten des Schwadaufnehmers 20 zu einer in der Mitte gelegenen, rückwärtigen Abgabeöffnung 44 fördert, hinter der der Einzugsförderer mit den Vorpresswalzen 30 folgt. Der Schwadaufnehmer 20 weist auch eine (wie die Querförderschnecke 36) rotativ angetriebene Aufsammeltrommel 34 auf, die unterhalb der Querförderschnecke 36 angeordnet ist und mit ihren Zinken das Gut vom Erdboden anhebt, um es der Querförderschnecke 36 zu übergeben. Die Aufsammeltrommel 34 kann beliebiger Ausführungsart sein, d.h. mit gesteuerten oder ungesteuerten Zinken versehen und innerhalb eines Gehäuses mit Abstreifern angeordnet sein, oder das Gehäuse kann entfallen.

Im Folgenden beziehen sich Richtungsangaben, wie seitlich, unten und oben, auf die Vorwärtsbewegungsrichtung V des Schwadaufnehmers 20, die in den Figuren nach links verläuft.

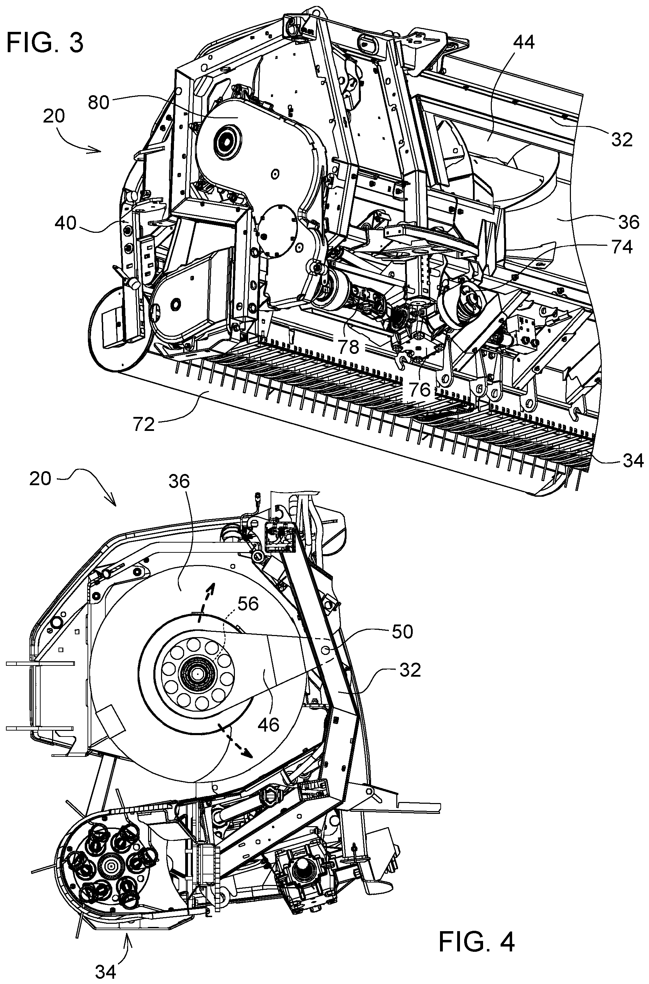

Der Schwadaufnehmer 20 umfasst einen Niederhalter 72 mit zwei Niederhalterwalzen, die zwischen Schwingen 40 befestigt sind, die sich an beiden Seiten des Schwadaufnehmers 20 bogenförmig von ihren vorderen, unteren Ende nach oben und hinten erstrecken und im oberen, hinteren Bereich des Schwadaufnehmers 20 an Drehachsen 42 am Gestell 32 des Schwadaufnehmers 20 um die Querachse schwenkbar abgestützt sind. In den Figuren 2 und 4 ist der Niederhalter aus Gründen der Übersichtlichkeit nicht mit eingezeichnet, was analog auch für die Stützräder 38 und Träger 48 gilt.

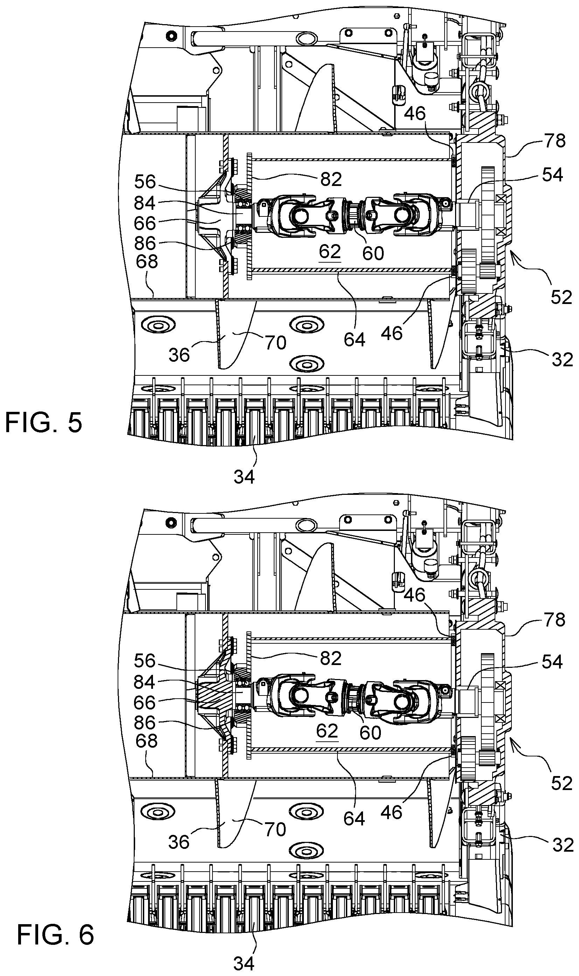

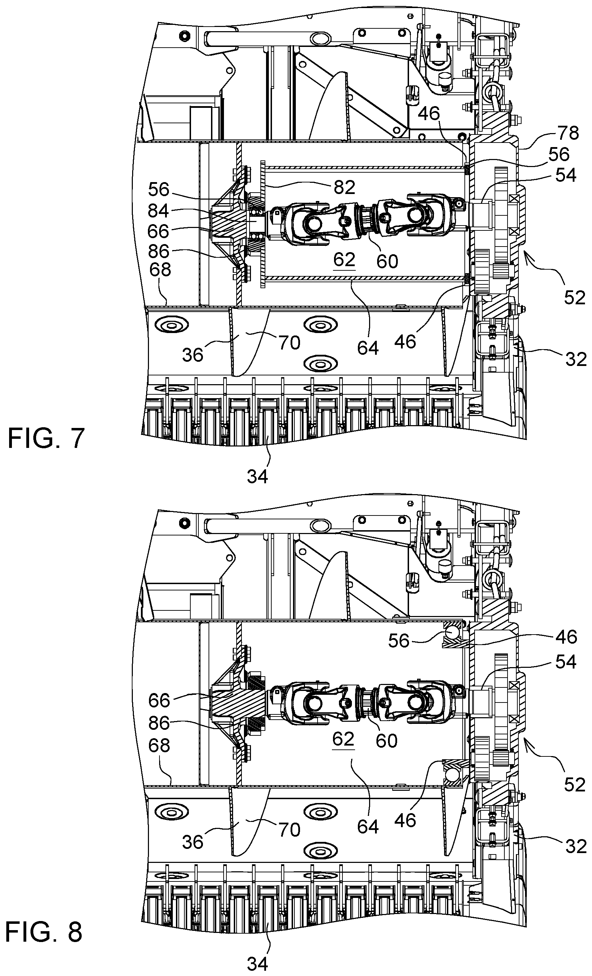

Es wird nun auf die Figuren 2 bis 8 verwiesen, von denen die Figur 2 eine perspektivische Ansicht des Schwadaufnehmers 20 von vorn links und Figur 3 eine Unteransicht von hinten links zeigt, während die Figur 4 einen vertikalen Querschnitt durch den Schwadaufnehmer 20 entlang der Linien 4-4 der Figur 2 wiedergibt. Die Figuren 5 bis 7 zeigen senkrechte Schnitte durch den linken Endabschnitt der Querförderschnecke 36 und den benachbarten Bereich des Gestells 32. Die Figur 8 zeigt eine alternative Ausführungsform.

Der Antrieb der Querförderschnecke 36 erfolgt, wie in der Figur 3 gezeigt, vom Feldhäcksler 10 her über einen mechanischen Antriebsstrang mittels einer sich vom Feldhäcksler 10 bzw. dessen Einzugsgehäuse 50 nach vorn erstreckenden (Gelenk-) Welle (nicht gezeigt), die mit einer Eingangskupplung 74 verbindbar ist. Eine mögliche Anordnung hierfür ist in der DE 10 2010 028 605 A1 gezeigt. Die Eingangskupplung 74 ist über ein Winkelgetriebe 76 mit einer weiteren, sich quer erstreckenden Gelenkwelle 78 verbunden, die einen seitlich am Gestell 32 angeordneten Getriebezusammenbau 80 antreibt. Der Getriebezusammenbau 80 umfasst abtriebsseitig, vgl. Figur 5, ein Zahnradgetriebe 52, das eine Ausgangswelle 54 antreibt, die am Gestell 32 drehbar abgestützt ist. Das Zahnradgetriebe 52 oder (direkt, ohne dazwischen geschaltetes Getriebe) die Ausgangswelle 54 könnten auch durch einen Hydraulik- oder Elektromotor angetrieben werden, der sich auf dem Schwadaufnehmer 20 befindet und vom Feldhäcksler 10 her versorgt wird.

Die Querförderschnecke 36 umfasst ein zylindrisches Rohr 68 mit daran angebrachten, wendelförmigen Mitnehmern 70. Anhand der Figuren 4 bis 7 ist erkennbar, dass die Querförderschnecke 36 an beiden Enden an Schwingen 46 abgestützt ist, die an Schwenklagern 50 mit sich in Querrichtung erstreckenden Drehachsen am Gestell 32 befestigt sind. Somit können die Schwingen 46 mit der Querförderschnecke 36 um die rückwärtig der Querförderschnecke 36 und etwa in deren Höhe angeordneten Drehachsen der Schwenklager 50 rotieren, was es der Querförderschnecke 36 ermöglicht, sich abhängig vom Gutdurchsatz bzw. von der Höhe des Schwads 58 nach oben und unten zu bewegen. Der Bewegungsbereich der Schwingen 46 kann durch feste oder verstellbare Anschläge nach oben und/oder unten begrenzt werden. Die Querförderschnecke 36 kann sich um ihre eigene Dreh- und Symmetrie-Achse drehen, da sie durch die Lagerungen 56 drehbar an den Schwingen 46 befestigt ist.

Um die Höhenbewegung der Querförderförderschnecke 36 zu ermöglichen, ist die Antriebswelle 54 durch eine teleskopierbare Gelenkwelle 60, die zwei Kreuzgelenke und dazwischen einen teleskopierbaren Abschnitt aufweist, mit der Querförderschnecke 36 antriebsverbunden. Die Gelenkwelle 60 ist in einem endseitigen Hohlraum 62 angeordnet, der nach außen hin durch eine sich axial zur Symmetrie- und Drehachse des Rohrs 68 erstreckende Wand 64 begrenzt wird. Diese Wand 64 ist hier (kreis-) zylindrisch ausgeführt, könnte jedoch einen beliebigen anderen Querschnitt aufweisen oder sich nach innen hin konisch verengen. Die Wand 64 ist an ihrem äußeren Ende starr mit der Schwinge 46 verbunden.

An ihrem inneren Ende ist die Wand 64 mit einer sich radial zum Rohr 68 erstreckenden Stützscheibe 82 verbunden. In ihrer Mitte ist die Stützscheibe 82 mit einer Öffnung versehen. An der Öffnung ist der äußere Ring der Lagerung 56 mit der Stützscheibe 82 verbunden. Durch den inneren Ring der Lagerung 56 erstreckt sich eine daran befestigte Abtriebswelle 84, die einerseits mit dem inneren Ende der Gelenkwelle 60 und andererseits mit einer Halterung 66 verbunden ist, jeweils drehfest. Die Halterung 66 ist starr mit dem Rohr 68 der Querförderschnecke 36 verbunden. Zwischen der Wand 64 und der Halterung 66 können Dichtungsmittel 86 angeordnet sein, die als mit der Wand 64 verbundener, starrer Ring und eine damit zusammenwirkende, flexible, mit der Halterung 66 verbundene Dichtung (bzw. umgekehrt) ausgeführt sein können.

Die teleskopierbare Gelenkwelle 60 ermöglicht eine Drehmomentübertragung und eine Bewegung der Querförderschnecke 36 nach oben und unten, wie in den Figuren 6 und 7 gezeigt wird.

Am rechten, in den Figuren 5 bis 7 nicht gezeigten, Ende der Querförderschnecke 36 ist auch eine drehbare Anbindung der Querförderschnecke 36 an die dort angeordnete Schwinge 46 vorgesehen. Da dort jedoch keine Antriebsverbindung und keine Gelenkwelle 60 vorhanden ist, kann die Halterung 66 ganz nach außen gerückt werden und die Lagerung 56 direkt zwischen der Halterung 66 und einer sich radial nach innen erstreckenden Wand der Schwinge 46 angebracht werden, welche die Funktion der Wand 82 der Figuren 5 bis 7 übernimmt.

Bei der zweiten Ausführungsform, die in der Figur 8 gezeigt wird, ist die Lagerung 56 direkt zwischen einem sich von der Schwinge 46 nach innen erstreckenden Ring und der Innenwand des Rohres 68 angeordnet. Die Anbindung der Gelenkwelle 60 an die Abtriebswelle 54 und an die Stützscheibe 66 und die zugehörige Funktionsweise entspricht der ersten Ausführungsform. Die Abstützung der Querförderschnecke 36 an ihrem nicht gezeigten, rechten Ende entspricht jener nach Figur 8, jedoch entfallen dort die Gelenkwelle 66 und die Stützscheibe 66.

## Patentansprüche

1. Erntevorsatz mit einem in einer Vorwärtsrichtung (V) über ein Feld bewegbaren, tragenden Gestell (32), an dem eine Einrichtung zum Aufnehmen von Erntegut von einem Feld und eine höhenbewegliche Querförderschnecke (36) angebracht sind, die mittels einer am Gestell (32) drehbar abgestützten Antriebswelle (54) antreibbar ist, wobei zwischen der Antriebswelle (54) und der Querförderschnecke (36) eine teleskopierbare Gelenkwelle (60) angeordnet ist, wobei die Gelenkwelle (60) in einem endseitigen Hohlraum (62) der Querförderschnecke (36) angeordnet ist und wobei die Querförderschnecke (36) an beiden Enden durch Lagerungen (56) an Schwingen (46) drehbar gelagert ist, die an Schwenklagern (50) mit sich in Querrichtung erstreckenden Drehachsen am Gestell (32) befestigt sind.

2. Erntevorsatz nach Anspruch 1 in Form eines Schwadaufnehmers (20), wobei die Einrichtung zum Aufnehmen von Erntegut als Aufsammeltrommel (34) ausgeführt ist.

3. Erntevorsatz (20) nach Anspruch 1 oder 2, wobei die Querförderschnecke (36) ein an seiner Außenseite mit wendelförmigen Mitnehmern (70) versehenes Rohr (68) umfasst.

4. Erntevorsatz (20) nach Anspruch 3, wobei die Lagerungen (56) zwischen der Schwinge (46) und der Innenseite des Rohres (68) der Querförderschnecke (36) angeordnet sind.

5. Erntevorsatz (20) nach Anspruch 3, wobei eine mit der Schwinge (46) starr verbundene Wand (64) sich im Innenraum des Rohres (68) von der Schwinge (46) axial nach innen erstreckt und einen Hohlraum bildet, in dem die Gelenkwelle (60) angeordnet ist.

6. Erntevorsatz (20) nach Anspruch 5, wobei eine durch eine Halterung (66) mit dem Rohr (68) starr verbundene Abtriebswelle (84) durch eine Lagerung (56) an einer mit der Wand (64) verbundenen Stützscheibe (82) abgestützt ist.

7. Erntemaschine, insbesondere Feldhäcksler (10), Ladewagen, Ballenpresse oder Mähdrescher mit einem Erntevorsatz (20) nach einem der vorhergehenden Ansprüche.

## Claims

1. Harvesting attachment with a supporting frame (32), which is movable in a forward direction (V) over a field and to which a device for picking up crop produce from a field and a height-adjustable cross-feeding auger (36) are attached, the latter being driveable by means of a drive shaft (54) rotatably supported on the frame (32), wherein a telescopic cardan shaft (60) is arranged between the drive shaft (54) and the cross-feeding auger (36), wherein the cardan shaft (60) is arranged in an end cavity (62) of the cross-feeding auger (36) and wherein the cross-feeding auger (36) is rotatably supported at both ends by bearings (56) on rockers (46) attached to the frame (32) at pivot bearings (50) with axes of rotation extending in the transverse direction.

2. Harvesting attachment according to Claim 1 in the form of a windrow picker (20), wherein the device for picking up crop produce is designed as a pick-up drum (34).

3. Harvesting attachment (20) according to Claim 1 or 2, wherein the cross-feeding auger (36) comprises a tube (68) provided on an outer side thereof with helical flights (70).

4. Harvesting attachment (20) according to Claim 3, wherein the bearings (56) are arranged between the rocker (46) and the inner side of the tube (68) of the cross-feeding auger (36).

5. Harvesting attachment (20) according to Claim 3, wherein a wall (64) rigidly connected to the rocker (46) extends axially inwardly from the rocker (46) in the interior of the tube (68) and forms a cavity in which the cardan shaft (60) is arranged.

6. Harvesting attachment (20) according to Claim 5, wherein an output shaft (84) rigidly connected to the tube (68) by a mounting (66) is supported by a bearing (56) on a support disk (82) connected to the wall (64).

7. Harvesting machine, in particular a forage harvester (10), loader wagon, baler or combine harvester, with a harvesting attachment (20) according to one of the preceding claims.

## Revendications

1. Cueilleur comprenant un châssis porteur (32), déplaçable sur un champ dans une direction vers l'avant (V), sur lequel sont montées une installation destinée à recueillir des produits récoltés à partir d'un champ et une vis sans fin transversale (36) mobile en hauteur, qui peut être entraînée au moyen d'un arbre d'entraînement (54) supporté de manière rotative sur le châssis (32), un arbre à cardans télescopique (60) étant disposé entre l'arbre d'entraînement (54) et la vis sans fin transversale (36), l'arbre à cardans (60) étant disposé dans une cavité d'extrémité (62) de la vis sans fin transversale (36), et la vis sans fin transversale (36) étant montée rotative, à ses deux extrémités, par des paliers (56) sur des bras oscillants (46), qui sont fixés au châssis (32) au niveau de paliers pivotants (50) présentant des axes de pivotement s'étendant dans la direction transversale.

2. Cueilleur selon la revendication 1, sous la forme d'un ramasseur d'andains (20), l'installation destinée à recueillir des produits récoltés étant réalisée sous la forme d'un tambour ramasseur (34).

3. Cueilleur (20) selon la revendication 1 ou 2, la vis sans fin transversale (36) comprenant un tube (68) pourvu, sur son côté extérieur, d'entraîneurs hélicoïdaux (70).

4. Cueilleur (20) selon la revendication 3, les paliers (56) étant disposés entre le bras oscillant (46) et le côté intérieur du tube (68) de la vis sans fin transversale (36).

5. Cueilleur (20) selon la revendication 3, une paroi (64), reliée rigidement au bras oscillant (46), s'étendant, dans l'espace intérieur du tube (68), axialement vers l'intérieur à partir du bras oscillant (46) et formant une cavité dans laquelle est disposé l'arbre à cardans (60).

6. Cueilleur (20) selon la revendication 5, un arbre de sortie (84), relié rigidement au tube (68) par un support (66), étant supporté par un palier (56) sur un disque de support (82) relié à la paroi (64).

7. Machine de récolte, notamment ensileuse (10), remorque autochargeuse, presse à balles ou moissonneuse-batteuse, comprenant un cueilleur (20) selon l'une quelconque des revendications précédentes.
